# EUROPÄISCHE PATENTSCHRIFT

(11) **EP 3 023 179 B1**
(45) Veröffentlichungstag und Bekanntmachung des Hinweises auf die Patenterteilung: **08.04.2020**
(21) Anmeldenummer: 14193657.5
(22) Anmeldetag: 18.11.2014
(51) Int. Cl.: B23B 27/08, B23B 27/10, B23B 29/04

(54) **Stechklinge und Ein- und Abstechwerkzeug**
Blade and tool for grooving and parting
Lame à tronçonner pour un outil destiné à tronçonner ou à saigner

(43) Veröffentlichungstag der Anmeldung: 25.05.2016
(73) Patentinhaber: WALTER AG, 72072 Tübingen (DE)
(72) Erfinder: Schwägerle, Rainer, 72074 Tübingen (DE); Zeeb, Rudi, 72070 Tübingen (DE)
(74) Vertreter: Sandvik

(56) Entgegenhaltungen:
- EP-A1- 2 745 963
- WO-A1-2005/084947
- WO-A1-2013/132480
- WO-A1-2014/095545
- DE-U1- 8 126 791

## Beschreibung

Die vorliegende Erfindung betrifft eine Stechklinge mit interner Kühlmittelzufuhr, wobei die Stechklinge zwei im Wesentliche planparallele Seitenflächen und eine durchgehende Querbohrung aufweist, die mit einem im Inneren der Stechklinge parallel zu den Seitenflächen verlaufenden Kühlmittelkanal verbunden ist.

Ebenso betrifft die vorliegende Erfindung auch ein Werkzeug zum Ein- oder Abstechen mit einer entsprechenden Stechklinge und einem Stechklingenhalter, welcher eine ebene seitliche Anlagefläche für die Anlage einer Seitenfläche der Stechklinge und mindestens eine zur Anlagefläche abgewinkelte Spannfläche für den Eingriff mit einer Randfläche der Stechklinge aufweist.

Entsprechende Stechklingen und Werkzeuge sind im Stand der Technik bekannt, beispielsweise aus der WO 2013/132480 A1, wobei der interne Kühlmittelkanal, der im Inneren der Stechklinge parallel zu den Seiten verläuft, in der Nähe eines Schneideinsatzes mündet, der an einem oder beiden Enden einer solchen Stechklinge eingespannt ist. Entsprechende Stechklingen bestehen im Wesentlichen aus einer länglichen Platte mit zwei planparallelen Seiten, einer oberen und einer unteren Randfläche und Stirnseiten, wobei Aufnahmeschlitze zum Einklemmen von Einstech- und Abstechschneideinsätzen typischerweise im Bereich der Stirnseiten der Stechklinge vorgesehen sind. Die Randflächen und die Stirnseiten verlaufen im Wesentlichen quer zu den parallelen Seitenflächen und verbinden diese miteinander.

Eine ebenfalls quer zu den Seitenflächen der Stechklinge verlaufende Schneidkante eines solchen Schneideinsatzes ist typischerweise etwas länger als die Stechklinge dick ist (gemessen als Abstand der parallelen Seitenflächen zueinander), sodass beim Einstechen in ein rotierendes Werkstück die in dem Werkstück durch die Schneidkante erzeugte Nut breiter ist als die Stechklinge dick ist, sodass die Stechklinge zusammen mit dem Schneideinsatz in die in dem Werkstück erzeugte Nut eindringen und so entsprechend tiefe Nuten hergestellt bzw. Werkstücke mit entsprechend großem Durchmesser abgestochen werden können.

In den letzten Jahrzehnten ist das Material entsprechender Schneideinsätze kontinuierlich weiterentwickelt worden, sodass die mit den Schneideinsätzen ausgestatteten Stechklingen eine hohe Zerspanungsleistung haben und entsprechend schnell Nuten einstechen oder Werkstücke abstechen können. Auch die kontinuierlich weiterentwickelten Materialien und Legierungen der Werkstücke stellen oft höhere und zusätzliche Anforderungen an die Bearbeitungswerkzeuge, insbesondere die Schneidelemente. Allerdings sind der Einsatz bei schwierig zu zerspannenden Werkstücken und die Erhöhung der Arbeitsgeschwindigkeit und des Zerspanvolumens unvermeidlich mit höherer Reibung und einer stärkeren Erhitzung der Schneideinsätze verbunden. Die Leistungsfähigkeit und Widerstandsfähigkeit der Schneidelemente bzw. lässt Schneideinsätze bei zu starker Erhitzung sehr schnell nach, was zu hohem Verschleiß und Verbrauch der teuren Schneidelemente führt.

Aus diesem Grunde sind in entsprechenden Stechklingen, die mit den zugehörigen Schneideinsätzen hohe Zerspanungsleistungen erzielen sollen, integrierte Einrichtungen zur Kühlmittelzufuhr vorgesehen, die es ermöglichen, das Kühlmittel auch beim tiefen Einstechen oder Abstechen effektiv auf den Schneideinsatz und in die Nähe der Schneidkante zuzuführen, sodass während des gesamten Zerspanvorgangs eine dauerhaft gute Kühlung des Schneideinsatzes erfolgen kann.

Aus diesem Grund verlaufen die Kühlmittelkanäle im Inneren der an sich schon recht schmalen Stechklingen, die typischerweise eine Dicke (d.h. einen Abstand zwischen ihren planparallelen Seitenflächen) von weniger als 10 mm und oft nur von 3 bis 6 mm haben.

Die Zufuhr des Kühlmittels zu dem internen Kühlmittelkanal bzw. den internen Kühlmittelkanälen erfolgt dabei zweckmäßigerweise am besten durch eine sich senkrecht durch die Seitenflächen erstreckende Querbohrung, die auf einer Seite mit einer entsprechenden Übergabeöffnung in der Anlagefläche eines Stechklingenhalters in Überdeckung gebracht wird und die auf der gegenüberliegenden Seite mit Hilfe von Kappen oder Deckeln bzw. Schrauben verschlossen wird, da die der Anlagefläche gegenüberliegende Seite der Stechklingen üblicherweise frei liegt und das Spannen der Stechklingen in der Regel nur über die obere und untere Randflächen erfolgt, die zu diesem Zweck eine dach- bzw. trapezförmige Kontur haben können.

Solche Verschlussdeckel oder Schrauben oder auch entsprechende Klemmpratzen, welche die von der Übergabeöffnung des Halters abgewandte Seite der Querbohrung in der Stechklinge verschließen, stehen notwendigerweise von der Seitenfläche der Stechklinge hervor und können den Spanfluss oder das Vorbeiführen der Stechklinge an radialen Vorsprüngen eines Werkstückes behindern.

Die EP 2 745 963 A1 betrifft eine Stechklinge entsprechend dem Oberbegriff des Anspruchs 1.

Der vorliegenden Erfindung liegt gegenüber diesem Stand der Technik die Aufgabe zu Grunde, eine Stechklinge und ein entsprechendes Werkzeug zum Ein- und Abstechen mit interner Kühlmittelzufuhr zu schaffen, welches auf einer Seite der Stechklinge, bzw. auf der von der Anlagefläche abgewandten Seite der Stechklinge bei einem entsprechenden Werkzeug keinerlei Überstand aufweist.

Diese Aufgabe wird durch eine Stechklinge gemäß dem unabhängigen Anspruch 1 gelöst.

Anstelle eines Deckels, einer Schraube oder dergleichen wird also lediglich ein Stopfen in die Querbohrung eingeführt, der nach dem Einsetzen in die Querbohrung jedenfalls auf der abzudichtenden Seitenfläche der Stechklinge keinerlei Überstand aufweist und vorzugsweise mit dieser Seitenfläche bündig abschließt.

Auch auf der gegenüberliegenden Seite sollte der Stopfen keinen oder allenfalls einen geringen Überstand aufweisen, weil die Stechklinge auf dieser Seite an der im Allgemeinen ebenen Anlagefläche eines Stechklingenhalters anliegen muss.

Da allerdings der Stechklingenhalter an der betreffenden Position eine Übergabeöffnung hat, wäre es grundsätzlich auch möglich, auf der der Anlagefläche zugewandten Seite der Stechklinge einen kleinen Überstand des Stopfens zuzulassen, wobei dies aber grundsätzlich nicht notwendig und deshalb auch nicht bevorzugt ist.

Um den Stopfen in der Querbohrung in einfacher Weise bündig und ohne Überstand platzieren zu können, ist vorgesehen, dass der Stopfen die Grundform eines Zylinders hat, dessen eine Stirnfläche einen radial überstehenden Flanschrand und eine zentrale Öffnung aufweist.

Diese Stirnfläche ist im Gebrauch der Stechklinge der Anlagefläche des Stechklingenhalters zugewandt, sodass der Stopfen von dieser Seite her in die dementsprechend als Stufenbohrung ausgebildete Querbohrung der Stechklinge eingeführt werden muss, wobei der Flanschrand in dem erweiterten Abschnitt der Stufenbohrung aufgenommen wird. Dabei entspricht die Tiefe dieses erweiterten Abschnittes der Stufenbohrung der Dicke des Flanschrandes, sodass der Flanschrand, wenn er am Grund des erweiterten Abschnittes der Stufenbohrung aufliegt, auf seiner Außenseite in etwa bündig mit der Seitenfläche der Stechklinge abschließt, die an der Anlagefläche eines Stechklingenhalters anliegt. Der Durchmesser des erweiterten Abschnittes entspricht dem Außendurchmesser des Flanschrandes, so dass der Flanschrand vorzugsweise in Gleitpassung in dem erweiterten Abschnitt der Querbohrung aufgenommen ist.

Der im vollständig eingesetzten Zustand des Stopfens bündige Abschluss des Stopfens bzw. der den Flanschrand aufweisenden Stirnfläche des Stopfens mit der Seitenfläche hat dabei den Vorteil, dass eine lose eingespannte Stechklinge an dem Stechklingenhalter in Längsrichtung verschiebbar ist, ohne dass ein überstehender Stopfen mit dem Rand einer Übergabeöffnung in der Anlagefläche in störenden Kontakt kommt.

Darüber hinaus wird bei passenden Maßen des Flanschrandes ein nicht vollständig in die Querbohrung eingesetzter Stopfen, dessen Stirnfläche noch einen kleinen Überstand gegenüber der Seitenfläche der Stechklinge hat, beim Anlegen der Stechklinge an die Anlagefläche des Stechklingenhalters durch die Anlagefläche vollständig in die Querbohrung hineingedrückt, bis der Flanschrand bzw. die betreffende Stirnfläche bündig mit der Seitenfläche abschließt und die innere Fläche des Flanschrandes am Grund des erweiterten Abschnittes der Querbohrung anliegt.

Wenn gemäß einer Variante der Erfindung der Abstand der Stirnflächen des Stopfens mit der Dicke der Stechklinge übereinstimmt, können beide Stirnflächen des Stopfens bündig mit den jeweiligen Seitenfläche der Stechklinge sein.

Für eine sichere Überführung des Kühlmittels von dem Stopfen in den Kühlmittelkanal der Stechklinge ist es zweckmäßig, wenn die Umfangsfläche des Stopfens eine umlaufende Nut aufweist, die bei beliebiger Ausrichtung des Stopfens bezüglich seiner Achse eine Verbindung der Öffnung auf der Umfangsfläche des Stopfens mit der Öffnung des Kühlmittelkanals am Umfang der Querbohrung herstellt. Die Öffnung in der Umfangsfläche des Stopfens befindet sich dann am Grund der umlaufenden Nut, sodass auch dann, wenn die entsprechende Öffnung des Kühlmittelkanals an einer anderen Umfangsposition liegt als die Öffnung in der Umfangsfläche des Stopfens, über die umlaufende Nut in der Umfangsfläche des Stopfens die Verbindung zwischen den beiden Öffnungen hergestellt wird.

Ohne eine solche Nut müsste der Stopfen jeweils in einer bestimmten, festen Orientierung in die Querbohrung eingesetzt werden, damit die Öffnung am Außenumfang des Stopfens mit der Öffnung des Kühlmittelkanals an der Innenfläche der Querbohrung zur Überdeckung kommt. Auch diese Variante ist jedoch grundsätzlich möglich, wobei dann Markierungen oder Führungselemente die richtige Orientierung des Stopfens beim Einsetzen in die Querbohrung sicherstellen sollten.

Für eine sichere Abdichtung der einen Seitenfläche der Stechklinge mit dem Stopfen und der mit dieser Seite bündig abschließenden Stirnseite des Stopfens ist es zweckmäßig, wenn in der Nähe dieser abzudichtenden Stirnseite eine umlaufende Dichtungsnut zur Aufnahme eines Dichtringes vorgesehen ist. Dabei ist die Tiefe der Dichtungsnut so bemessen, dass ein in der Dichtungsnut aufgenommener Dichtring über die die Dichtungsnut begrenzende Umfangsfläche des Stopfens hervorsteht, sodass nach dem Einsetzen des Stopfens in die Querbohrung die Dichtung zwischen dem Grund der Dichtungsnut und der Innenfläche der Querbohrung etwas zusammengedrückt wird und damit abdichtend wirkt.

Die Öffnungen des Stopfens auf seiner einen Stirnfläche und auf seiner Umfangsfläche sind zweckmäßigerweise durch eine schräg zur Achse des Stopfens verlaufende Bohrung miteinander verbunden. Grundsätzlich ist es aber auch möglich, anstelle einer Bohrung in dem Stopfen eine Nut vorzusehen, die von der umlaufenden Kante des Stopfens, die durch die Stirnfläche mit dem Flanschrand und die Umfangsfläche des Stopfens gebildet wird, ausgeht und sich von dort in das Innere des Stopfens hineinerstreckt, wobei der Grund der Nut entsprechend dem Verlauf der ansonsten vorzusehenden Bohrung ebenfalls geneigt zur Achse des Stopfens verläuft und auf diese Weise eine Verbindung zwischen der betreffenden, aufgrund der Nut teilweise offenen Stirnfläche des Stopfens zu der durch die Nut ebenfalls teilweise offenen Umfangsfläche des Stopfens herstellt, sodass effektiv auch der Kühlmittelkanal, der in der Umfangsfläche der Querbohrung mündet, mit einer entsprechenden Öffnung in der Anlagefläche eines Stechklingenhalters verbunden ist bzw. verbunden werden kann.

Wie bereits erwähnt, ist die Querbohrung der Stechklinge vorzugsweise als Stufenbohrung ausgebildet, wobei der erweiterte Bohrungsabschnitt zur Aufnahme des Flanschrandes des Stopfens vorgesehen ist.

Im Übrigen ist es auch möglich, die Querbohrung bezüglich einer Längsmittelebene durch die Stechklinge parallel zu den beiden Seitenflächen symmetrisch auszugestalten, d. h. an beiden Enden der Querbohrung einen erweiterten Abschnitt für die Aufnahme des Flanschrandes des Stopfens vorzusehen. Die umlaufende Dichtungsnut in dem Stopfen zur Aufnahme des Dichtungsringes müsste dann von der Stirnseite des Stopfens etwas weiter nach innen versetzt werden, damit die Dichtung jeweils in dem dann zentralen Abschnitt der Querbohrung abdichtet, der den kleineren Durchmesser hat. Der Stopfen kann dann wahlweise von beiden Seiten der Stechklinge her eingesetzt werden, wobei auf beiden Seiten die Enden der Querbohrung eine radiale Erweiterung für die Aufnahme des Flanschrandes vorgesehen ist und die Abdichtung des Stopfens jeweils weiter innen in der Querbohrung in dem nicht erweiterten Abschnitt stattfindet.

Hinsichtlich des Werkzeuges zum Ab- oder Einstechen mit einem Stechklingenhalter, welcher eine ebene seitliche Anlagefläche für die Anlage einer Seitenfläche einer Stechklinge aufweist und welcher mindestens eine zur Anlagefläche abgewinkelte Spannfläche für den Eingriff mit einer Randfläche der Stechklinge aufweist, wird die der Erfindung zu Grunde liegende Aufgabe dadurch gelöst, dass das Werkzeug mit einer Stechklinge nach einem der Ansprüche 1 bis 7 ausgerüstet wird und die Anlagefläche des Werkzeuges eine Übergangsöffnung aufweist, welche bei in betriebsbereiter Position montierter Stechklinge der stirnseitigen Öffnung des Stopfens gegenüberliegt.

Für eine sichere Abdichtung der Übergabeöffnung gegenüber der Seitenfläche mit der Öffnung im Stopfen ist zweckmäßigerweise in der Anlagefläche des Werkzeuges eine die Übergabeöffnung umschließende Nut zur Aufnahme eines Dichtungsringes vorgesehen.

Dabei kann die Übergabeöffnung in der Anlagefläche des Stechklingenhalters beispielsweise auch ein Langloch sein, welches von einer entsprechenden Dichtungsnut und einer darin angeordneten Dichtung umfasst ist.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1a: ein erfindungsgemäßes Werkzeug mit einer Stechklinge und einem Stopfen gemäß der vorliegenden Erfindung,
- Figur 1b: Stechklingenhalter
- Figur 1c: Stechklinge
- Figur 2: eine Schnittansicht des Stopfens,
- Figur 3: eine teilweise Schnittansicht durch die Stechklinge im Bereich einer Querbohrung,
- Figur 4: eine perspektivische Darstellung des Stopfens und
- Figur 5: einen Schnitt durch ein Ein- und Abstechwerkzeug mit einer eingespannten Stechklinge und dem erfindungsgemäßen Stopfen zur Übergabe der Kühlflüssigkeit.

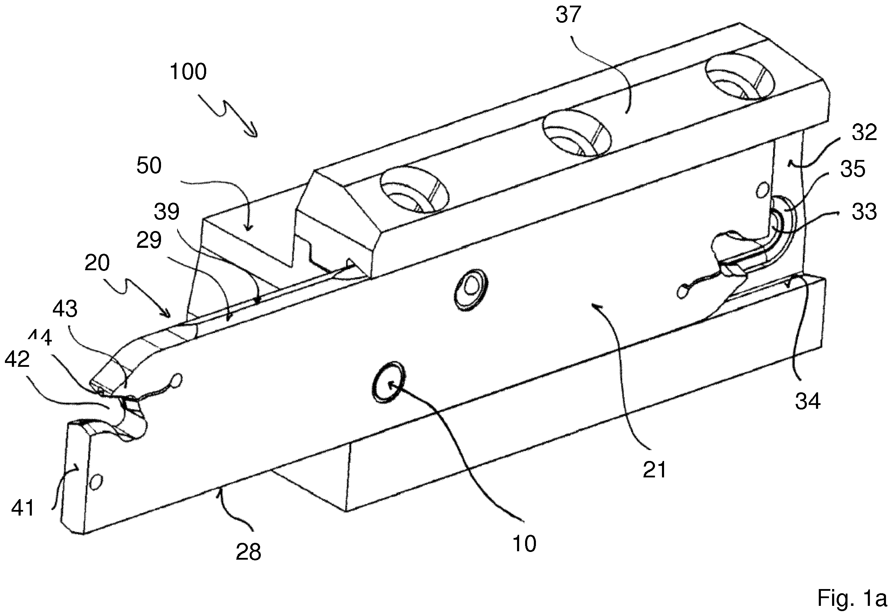

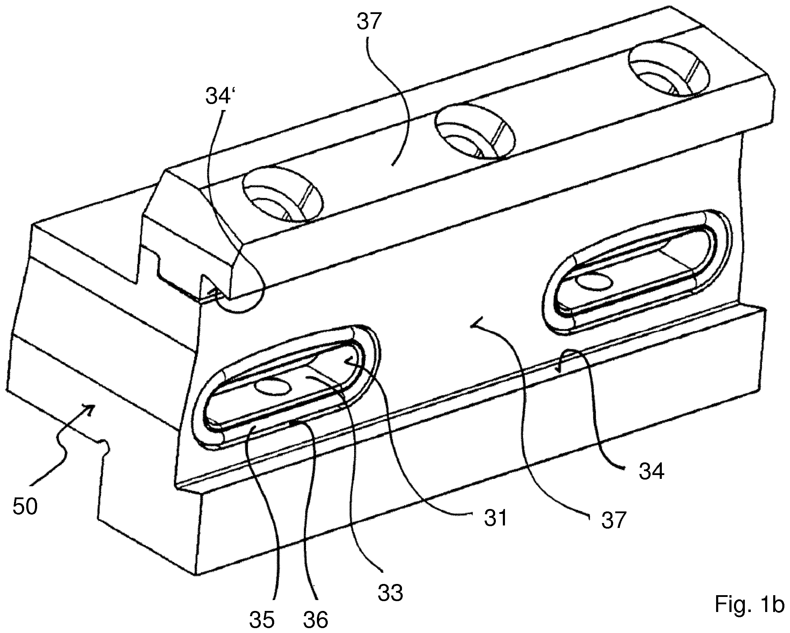

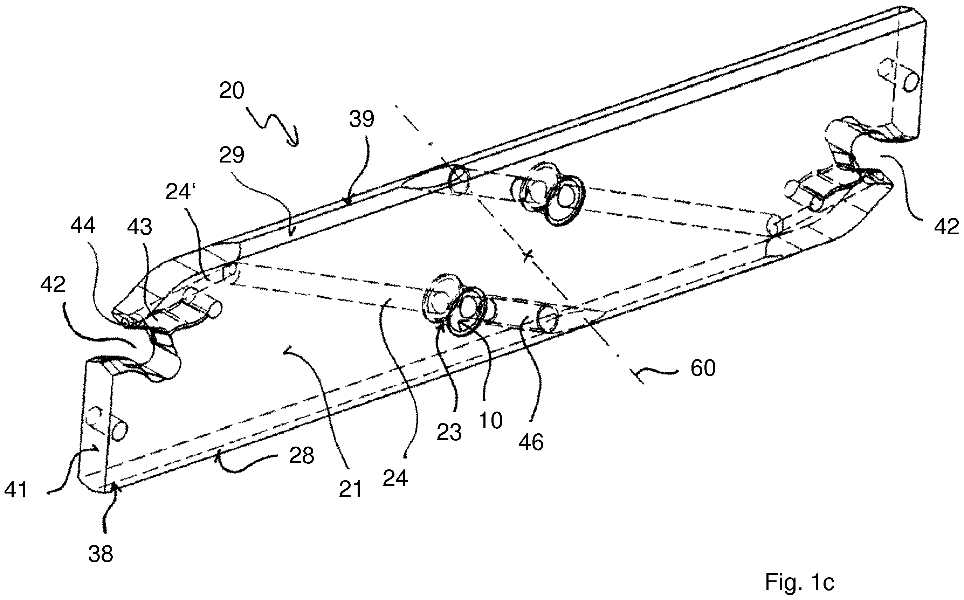

Man erkennt in Figur 1a ein insgesamt mit 100 bezeichnetes Ein- und Abstechwerkzeug mit einem Stechklingenhalter 50 und einer Stechklinge 20, die getrennt in den Figuren 1b bzw. 1c dargestellt sind. Der Stechklingenhalter weist eine Anlagefläche 32, eine Spannfläche 34 und einen Spannblock 37 auf. Die oberen und unteren Randflächen 38 und 39 der Stechklinge 20 haben ein dachförmiges Profil und die untere Spannfläche 34 sowie eine obere Spannfläche 34'am Spannblock 37 haben eine je einer Seite 28, 29 des Dachprofils entsprechende Neigung, sodass sie beim Festspannen des Spannblocks 37 mit den von der Anlagefläche 32 abgewandten Dachflächen 28,29 der Randflächen 38 und 39 in Spanneingriff treten und dadurch die Stechklinge 20 mit ihrer Seitenfläche 22 fest an die Anlagefläche 32 anpressen.

Die Anlagefläche 32 weist bei dem Ausführungsbeispiel nach Figur 1b zwei Übergabeöffnungen 31 auf, von denen aber jeweils nur eine aktiv ist, nämlich diejenige, die eine Überdeckung mit einem Stopfen 10 und der entsprechenden Querbohrung 23 einer Stechklinge 20 hat.

Im Bereich der Stirnseite 41 der Stechklinge 20 (Figur 1c) erkennt man eine Aufnahme 42 für einen (nicht dargestellten) Schneideinsatz zum Ein- oder Abstechen, wobei ein Abschnitt der Stechklinge 20 oberhalb dieses Aufnahmeschlitzes 42 als federnd bewegbarer Spannfinger 43 ausgebildet ist.

Die Stechklinge ist punktsymmetrisch bezüglich einer Symmetrieachse 60, die sich senkrecht zu den Seitenflächen 21, 22 erstreckt. Die Stechklinge hat in Ihrem Inneren zentral und parallel zu den Seitenflächen 21, 22 verlaufende Kühlmittelkanäle 24, 24' wobei der Austrittskanal 24' in dem Spannfinger 43 einer unmittelbar auf die Schneidkantenposition eines (nicht dargestellten) Schneideinsatzes mündenden Austrittsöffnung 44 mündet. Das entgegengesetzte Ende des Kühlmittelkanals 24, jenseits der Verbindung zur Querbohrung, der von der unteren Randfläche 38 aus in die Stechklinge 20 gebohrt wird, ist durch einen Verschlussstopfen 46 dicht verschlossen.

Im Betrieb wird der Kühlmittelraum 33 mit Kühlmittel unter Druck gesetzt und das Kühlmittel fließt dann durch die mit einem umlaufenden Dichtring 35 abgedichtete Übergabeöffnung 31 in die stirnseitige Öffnung 2, die Bohrung 4 des Stopfens 10 sowie durch die Öffnungen 3 und 26 hindurch und in die Kühlmittelkanal 24, der über den Austrittskanal 24' am Ende des Spannfingers 43 in der Austrittsöffnung 44 mündet, von wo ein Kühlmittelstrahl unmittelbar auf den Schneidkantenbereich eines in der Aufnahme 42 festgespannten Schneideinsatzes (nicht dargestellt) gerichtet ist.

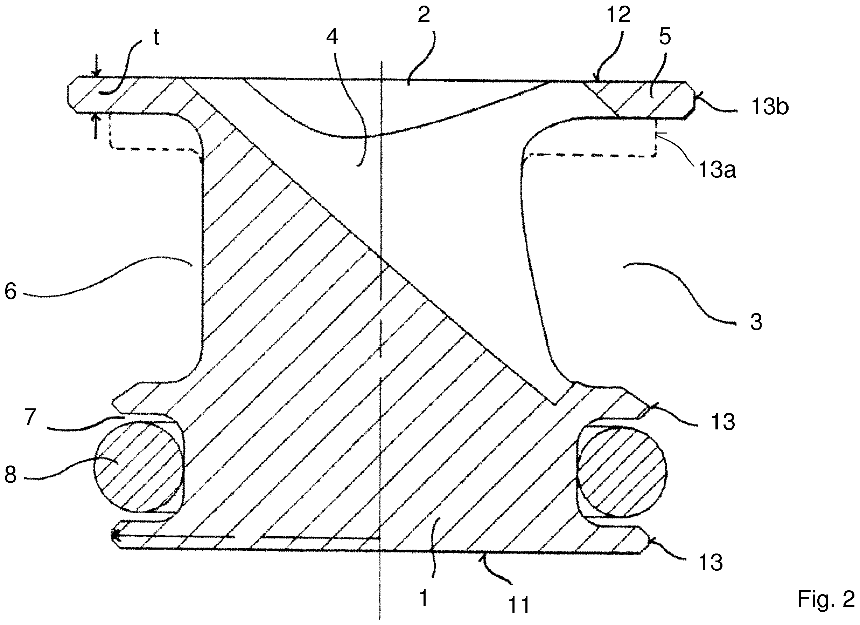

In Figur 2 erkennt man einen Schnitt durch den erfindungsgemäßen Stopfen mit einem annähernd zylindrischen Grundkörper 1 mit dem Radius R, der in der gezeigten Ausrichtung eine untere Stirnfläche 11, eine obere Stirnfläche 12 und eine Umfangsfläche 13 hat, die im vorliegenden Fall mehrfach abgestuft ist und einen Hauptradius R aufweist, der dem Innenradius der Querbohrung 23 entspricht oder geringfügig kleiner ist.

Der obere Abschnitt des Stopfens 10 ist durch einen umlaufenden Flanschrand 5 erweitert und in einem mittleren axialen Bereich ist der Stopfen mit einer umlaufenden Verteilernut 6 versehen. Eine Dichtungsnut 7 ist in der Nähe der unteren Stirnfläche 11 entlang der Umfangsfläche 13 umlaufend vorgesehen. Diese Dichtungsnut 7 nimmt einen Dichtungsring 8 auf, der den Stopfen 10 gegenüber der Innenfläche der Querbohrung 23 abdichtet, sobald der Stopfen in die Querbohrung eingesetzt worden ist. Eine Bohrung 4 erstreckt sich durch den Stopfen schräg zu dessen Achse 9 von der oberen Stirnfläche 12 zum Grund der Nut 6 und bildet so eine stirnseitige Öffnung 2 und eine umfangsseitige Öffnung 3 des Stopfens 10. Die Nut 6 erstreckt sich bis an den Flansch 5. Sie kann aber auch schmaler ausgebildet sein, so dass vor dem Flansch 5 noch eine abgestufter zylindrischer Absatz ausgebildet wäre, der in Figur 2 gestrichelt angedeutet ist, mit einem Umfangsabschnitt 13a, der unabhängig von dem Flansch 5 und dessen Umgangsfläche 13b eine Führungsfläche in der zylindrischen Querbohrung 23 der Stechklinge 20 bilden könnte.

Die Bohrung 4 zusammen mit den Öffnungen 2 und 3 könnte jedoch auch ersetzt werden durch eine Nut, die sich vom Rand der Stirnseite 12 ausgehend in Richtung des Zentrums des Stopfens 10 erstreckt. In Figur 2 würde dies dem Wegfall der Schraffur des Flansches 5 oben rechts (unterhalb der Bezugszahl 12) entsprechen, so dass die Bohrung 4 durch eine Nut ersetzt wäre, die außer der Bohrung 4 auch diesen in Figur 2 schraffierten Flanschrandbereich des Stopfens 10 umfassen würde. Mit einer Bohrung 4 und einem vollständig umlaufenden Flansch 5 ist der Stopfen allerdings stabiler und weniger anfällig für Beschädigungen.

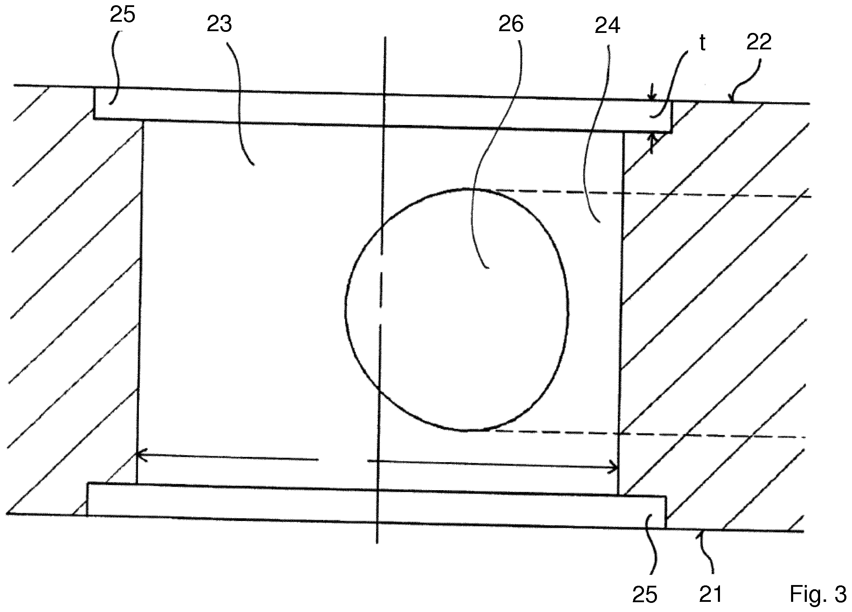

In Figur 3 erkennt man, dass die Querbohrung 23 mit dem Durchmesser 2R dafür vorgesehen ist, den Stopfen 10 in mehr oder weniger enger Passung aufzunehmen, wobei die axiale Position einer Öffnung 26 des Kühlmittelkanals 24 der axialen Position der umlaufenden Nut 6 des Stopfens und der Öffnung 3 am Grund der Nut entspricht. Der Dichtring 8 liegt bei eingesetztem Stopfen 10 an der Innenwand der Querbohrung an und dichtet den Stopfen bzw. den Bereich der Nut 6 gegenüber der Seitenfläche 21 und der Stirnseite 11 des Stopfens ab. Eine enge Passung zwischen den Umfangsflächen 13, 13a des Stopfens 10 und der Innenfläche der Querbohrung 23 ist allerdings nicht zwingend erforderlich, solange zumindest der Dichtungsring 8 und der Flanschrand 5 eine Zentrierung des Stopfens 10 in der Querbohrung 23 gewährleisten. Für einen sicheren und passgenauen Sitz des Stopfens 10 ist es jedoch zweckmäßig, wenn zumindest eine der Flächen 13a bzw. 13b in der Querbohrung 23 bzw. in deren erweitertem Abschnitt 25 eng geführt ist.

Die Dicke des Flansches 5 entspricht der Tiefe t des erweiterten Bohrungsabschnittes 25 der Querbohrung 23, und die Dicke des Stopfens 10, gemessen zwischen den Stirnflächen 11, 12 entspricht der Dicke der Stechklinge 20, sodass der Stopfen 10 nach dem Einsetzen in die Querbohrung 23 mit seinen Stirnseiten 11, 12 bündig mit den entsprechenden Seitenflächen 21 bzw. 22 der Stechklinge 20 abschließt. Dabei besteht über die Bohrung 4 eine Fluidverbindung von der stirnseitigen Öffnung 2 des Stopfens 10 zu der umfangsseitigen Öffnung 3, der Nut 6 und der Öffnung 26 des Kühlmittelkanals 24. Der Stopfen steht in keiner Richtung von den Seitenflächen 21, 22 hervor und behindert insbesondere keinerlei Spanfluss und hindert auch nicht bei dem engen Vorbeiführen der Stechklinge an einem Werkstück. Auf der Seitenfläche 22 kann die Stecklinge 20 bei leicht gelöstem Spannblock ungehindert in Längsrichtung, d. h. parallel zu den Seitenflächen 21, 22, verschoben werden.

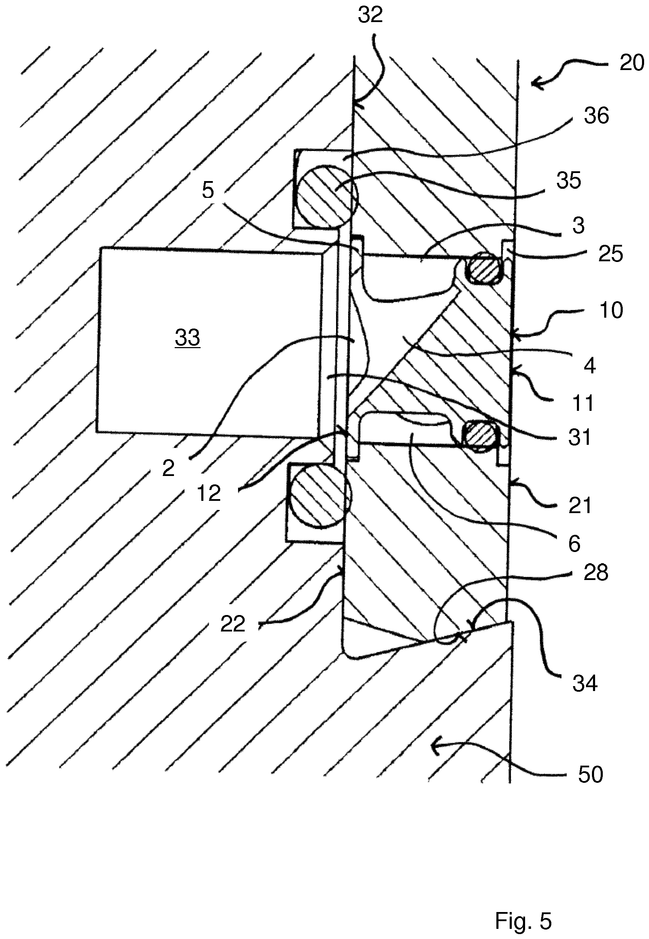

Die Querbohrung 23 ist im vorliegenden Ausführungsbeispiel bezüglich einer Längsmittelebene durch die Stechklinge parallel zu den beiden Seitenflächen symmetrisch ausgebildet, d. h. an beiden Enden der Querbohrung 23 erkennt man einen erweiterten Abschnitt 25 für die Aufnahme des Flanschrandes 5 des Stopfens 10. Die umlaufende Dichtungsnut 7 in dem Stopfen 10 zur Aufnahme des Dichtungsringes 8 ist von der Stirnseite 11 bzw. 12 des Stopfens 10 genügend weit nach innen versetzt, so dass die Dichtung 8 jeweils in dem zentralen Abschnitt der Querbohrung 23 abdichtet, der den kleineren Durchmesser 2R hat. Der Stopfen 10 kann dadurch wahlweise von beiden Seiten 21 oder 22 der Stechklinge her eingesetzt werden, wobei dann jeweils auf einer Seite zwischen der Umfangsfläche 13 an einer Stirnseite 11 des Stopfens 10 und der umlaufenden Randfläche der Erweiterung 25 eine umlaufende Nut in der Seitenfläche 21 gebildet wird (siehe Figur 5). Eine der beiden Erweiterungen 25 könnte jedoch auch fortgelassen werden, so dass der Stopfen dann jeweils nur von der Seite (z. B. 22) mit der Erweiterung 25 her in die Querbohrung 23 eingesetzt werden könnte.

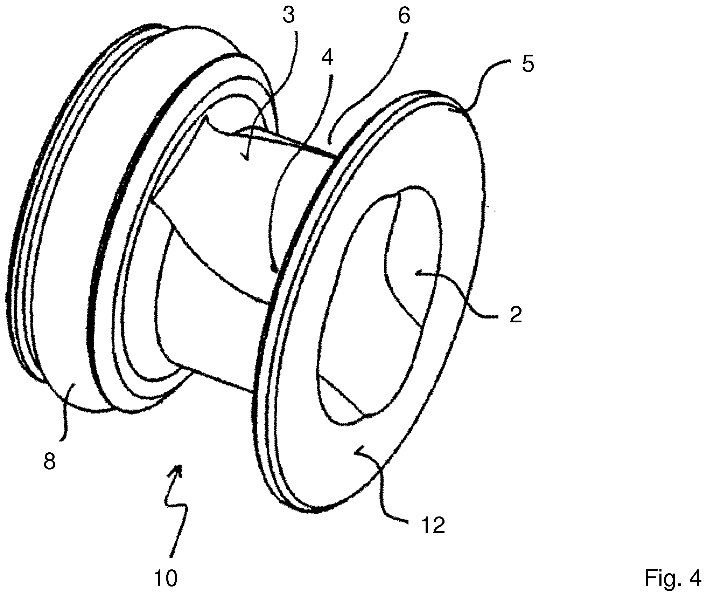

In Figur 4 erkennt man nochmals eine perspektivische Darstellung des Stopfens 10 mit den Stirnseiten 11 (nicht sichtbar) und 12, den Öffnungen 2, 3, der die Öffnungen verbindenden Bohrung 4, der umlaufenden Nut 6 und dem in einer Dichtungsnut 7 aufgenommenen Dichtring 8.

Dabei ist es nicht notwendig, dass die Umfangsfläche 13 oder die Abschnitte 13a der Umfangsfläche 13 mit der Innenfläche der Bohrung 23 in Kontakt treten, da die genaue Positionierung des Stopfens 10 in der Bohrung 23 allein durch die O-Ring-Dichtung 8 an einem Ende und die zylindrische Mantelfläche 13b des Flanschrandes 5 in dem erweiterten Bohrungsabschnitt 25 sichergestellt wird.

Anhand der Figur 5 kann man nochmals in einem teilweisen Schnitt durch die im Stechklingenhalter 50 montierte Stechklinge 20 die Fluidverbindung und die Abdichtung aller Elemente eines erfindungsgemäßen Abstechwerkzeugs erkennen. Durch die Spannfläche 34 und eine entsprechende Dachfläche 28 an der Randfläche 38 der Stechklinge wird die Stechklinge 20 mit ihrer Seitenfläche 22 fest an die Anlagefläche 32 des Stechklingenhalters 50 angepresst. Die Seitenfläche 22 liegt damit abgedichtet an dem Dichtring 35 in der Nut 36 auf der Anlagefläche an, welche die Übergabeöffnung 31 vollständig umgibt. Der Stopfen 10 liegt mit seiner Öffnung 2 der Öffnung 31 des Kühlmittelraumes 33 genau gegenüber, wobei der Flanschrand 5 vorzugsweise einen etwas größeren Durchmesser hat als es dem in vertikaler Richtung gemessenen Durchmesser der Übergabeöffnung 31 entspricht, sodass der Flanschrand 5 des Stopfens ebenfalls durch die Anlagefläche 32 fest in die Querbohrung 23 hineingedrückt wird und bündig mit der Seitenfläche 32 ausgerichtet ist. Dadurch liegt der Flanschrand 5 auf dem Grund des erweiterten Bohrungsabschnittes 25 auf und die gegenüberliegende Stirnseite 11 des Stopfens schließt ebenso bündig mit der Seitenfläche 21 der Stechklinge ab wie die Stirnseite 12 mit der Seitenfläche 22. Es versteht sich aber, dass der Flanschrand 5 aber immer noch vollständig innerhalb der von dem Dichtring 35 umschlossenen Fläche liegt

Das unter Druck stehende Kühlmittel in dem Kühlmittelraum 33 gelangt durch die Bohrung 4 des Stopfens 10 in die umlaufende Nut 6 und von dort in den Kühlmittelkanal 24 der Stechklinge und wird von dort über den Kühlmittelkanal 24 zu einem Schneideinsatz geleitet, sodass ein entsprechender Kühlmittelstrahl auf den Schneidkantenbereich eines Schneideinsatzes gerichtet wird.

Um einen Überstand des Stopfens bzw. des Flanschrandes 5 und seiner Stirnfläche 12 gegenüber der Seitenfläche 22 auch bei Toleranzabweichungen sicher auszuschließen, kann die Dicke des Flanschrandes 5 um die maximale Toleranzabweichung dünner gewählt werden als es der Tiefe des erweiterten Bohrungsabschnittes 25 entspricht. Der Druck des Kühlmittels in der Bohrung 4 sorgt dabei in jedem Fall dafür, dass der Flanschrand 5 fest gegen den Grund des erweiterten Bohrungsabschnittes gedrückt wird, wobei das Maß zwischen Flanschrand und Stirnseite 11 so gewählt wird, dass in dieser Position die Stirnseite 11 bündig mit der Seitenfläche 21 abschließt oder geringfügig zurückspringend angeordnet ist.

Der umlaufende Dichtring 35 stellt sicher, dass außerhalb der Übergabeöffnung 36 keinerlei Kühlmittel zwischen die Seitenfläche 22 der Stechklinge und die Anlagefläche 32 des Stechklingenhalters gelangen kann.

Die Montage des Stopfens einfach durch Einstecken in die Querbohrung 23 ist wesentlich einfacher als die herkömmliche Abdichtung der Bohrung 23 von der Seitenfläche 21 her, wie sie bisher im Stand der Technik üblich war, und man vermeidet außerdem jeglichen Überstand im Bereich der Abdichtung der Querbohrung 23 auf der Seitenfläche 21, sodass sich weder Späne in diesem Bereich verfangen können noch ein enges Vorbeiführen der Stechklinge an einem Werkstückabschnitt verhindert wird.

### Bezugszeichenliste

- 1: Grundkörper des Stopfens 10
- 2,3: Öffnungen
- 4: Bohrung
- 5: Flanschrand
- 6: Verteilernut
- 7: Dichtungsnut
- 8: O-Ring-Dichtung / Dichtring
- 9: Achse
- 10: Stopfen
- 11, 12: Stirnseiten des Stopfens
- 13: Umfangsfläche des Stopfens
- 20: Stechklinge
- 21, 22: Seitenflächen
- 23: Querbohrung
- 24: Kühlmittelkanal
- 25: erweiterter Abschnitt der Querbohrung
- 26: Öffnung in Umfangsfläche der Querbohrung
- 28: untere Dachfläche
- 29: obere Dachfläche
- 31: Übergabeöffnung
- 32: Anlagefläche
- 33: Kühlmittelraum
- 34: untere Spannfläche
- 34': obere Spannfläche
- 35: Dichtring
- 36: Dichtungsnut
- 37: Spannblock
- 38, 39: Randflächen
- 41: Stirnseiten der Stechklinge
- 42: Einsatzaufnahme
- 43: Spannfinger
- 44: Austrittsöffnung
- 46: Verschlussstopfen
- 50: Stechklingenhalter
- 60: Symmetrieachse
- 100: Ein- und Abstechwerkzeug

## Patentansprüche

1. Stechklinge (20) mit interner Kühlmittelzufuhr, wobei die Stechklinge (20) zwei im wesentlichen planparallele Seitenflächen (21, 22) und eine durchgehende Querbohrung (23) aufweist, die mit einem im Inneren der Stechklinge (20) parallel zu den Seitenflächen (21, 22) verlaufenden Kühlmittelkanal (24) verbunden ist, wobei ein Stopfen (10) mit zwei im Wesentlichen parallelen Stirnflächen (11, 12) und einer Umfangsfläche (13) vorgesehen ist, welche die Stirnflächen (11, 12) miteinander verbindet, wobei der Stopfen (10) in die Querbohrung (23) so einsetzbar ist, dass die Querbohrung (23) zu mindestens einer Seitenfläche (21) der Stechklinge (20) hin abdichtet und ohne Überstand über die abgedichtete Seitenfläche (21) mit dieser Seitenfläche (21) abschließt, wobei der Stopfen (10) auf seiner der abgedichtete Seitenfläche (21) gegenüberliegenden Stirnfläche (12) sowie an seiner Umfangsfläche (13) je eine Öffnung (2 bzw. 3) aufweist, und wobei diese Öffnungen (2, 3) im Inneren des Stopfens (10) miteinander verbunden sind, wodurch der Stopfen (10) den am Umfang der Querbohrung (23) offenen Kühlmittelkanal (24) mit einer Kühlmittelquelle gegenüber der stirnseitigen Öffnung (2) des Stopfens (10) verbinden kann, **dadurch gekennzeichnet, dass** der Stopfen (10) die Grundform eines Zylinders hat, dessen eine Stirnfläche (12) einen radial überstehenden Flanschrand (5) und eine zentrale Öffnung (2) aufweist.

2. Stechklinge nach einem der vorstehenden Ansprüche, **dadurch gekennzeichnet, dass** die Umfangsfläche (13) eine umlaufende Verteilernut (6) aufweist, die bei beliebiger Ausrichtung des Stopfens (10) bezüglich seiner Achse (9) eine Verbindung der Öffnung (3) auf der Umfangsfläche (13) des Stopfens (10) mit der Öffnung (26) des Kühlmittelkanals in der Querbohrung herstellt.

3. Stechklinge nach einem der vorstehenden Ansprüche, **dadurch gekennzeichnet, dass** die Umfangsfläche (13a) nahe der abzudichtenden Stirnseite (11) eine umlaufende Dichtungsnut (7) zur Aufnahme eines Dichtringes (8) aufweist.

4. Stechklinge nach einem der vorstehenden Ansprüche, **dadurch gekennzeichnet, dass** die Öffnungen (2, 3) des Stopfens auf einer Stirnfläche (12) und auf seiner Umfangsfläche (13) durch eine schräg zur Achse (9) des Stopfens (10) verlaufende Bohrung (4) verbunden sind.

5. Stechklinge nach einem der Ansprüche 1 - 3, **dadurch gekennzeichnet, dass** die Öffnungen (2, 3) an der Stirnfläche (12) und am Umfang des Stopfens durch eine Nut verbunden sind, welche sich schräg zur Achse des Stopfens von einer durch den Schnitt der Umfangsfläche (13b) und einer Stirnfläche (12) gebildeten Kante in die Stirnfläche und die Umfangsfläche hinein erstreckt.

6. Stechklinge nach einem der vorstehenden Ansprüche, **dadurch gekennzeichnet, dass** die Querbohrung (23) der Stechklinge als Stufenbohrung ausgebildet ist, deren erweiterter Bohrungsabschnitt (25) zur Aufnahme des Flanschrandes (5) des Stopfens (10) vorgesehen ist.

7. Stechklinge nach einem der vorstehenden Ansprüche, **dadurch gekennzeichnet, dass** die Querbohrung (23) der Stechklinge bezüglich einer Zentralebene parallel zu und zwischen den Seitenflächen (21, 22) der Stechklinge (20) symmetrisch ausgebildet ist

8. Werkzeug zum Ab- oder Einstechen mit einer Stechklinge (20) nach einem der der Ansprüche 1-7 und einem Stechklingenhalter (50), welcher eine ebene seitliche Anlagefläche (32) für die Anlage einer Seitenfläche (22) der Stechklinge und mindestens eine zur Anlagefläche (32) abgewinkelte Spannfläche (34) für den Eingriff mit einer Randfläche der Stechklinge aufweist, wobei die Anlagefläche eine Übergabeöffnung (31) aufweist, welche bei montierter Stechklinge der stirnseitigen Öffnung (2) des Stopfens (10) gegenüber liegt.

9. Werkzeug nach Anspruch 8, **dadurch gekennzeichnet, dass** in der Anlagefläche (32) eine die Übergabeöffnung (31) umschießende Nut (36) zur Aufnahme eines Dichtungsringes (35) vorgesehen ist.

## Claims

1. Parting blade (20) having an internal coolant supply, wherein the parting blade (20) comprises two substantially parallel planar side faces (21, 22) and a transverse bore (23) extending there through in communication with a coolant channel (24) running in the interior of the parting blade (20) parallel to the side faces (21, 22), wherein a plug (10) is provided having two substantially parallel end faces (11, 12) and a peripheral surface (13) connecting the end faces (11, 12), which plug (10) is to be inserted into the transverse bore (23) such that the transverse bore (23) is sealed with respect to at least one side face (21) of the parting blade (20) and is flush with the side face (21) without any protrusion beyond the sealed side surface (21), wherein on its end face (12) opposite of the sealed side surface (21) as well as on its peripheral surface (13) the plug (10) comprises each an aperture (2, 3, resp.), and wherein these apertures (2, 3) are connected with one other in the interior of the plug (10), such that the plug (10) is enabled to connect the coolant channel (24) provided at the periphery of the transverse bore (23) to a coolant source arranged vis-à-vis the end face aperture (2) of the plug (10), **characterized in that** the plug (10) has a basically cylindrical shape, with an end face (12) which is provided with a radially projecting flanged rim (5) and a central aperture (2).

2. Parting blade according to any of the preceding claims, **characterized in that** the peripheral surface (13) comprises a circumferential distributor groove (6), which provides a connection of the aperture (3) on the peripheral surface (13) of the plug (10) with the opening (26) of the coolant channel in the transverse bore, irrespective of the orientation of the plug (10) with respect to the axis (9) thereof.

3. Parting blade according to any of the preceding claims, **characterized in that** adjacent the end face (11) to be sealed the peripheral surface (13a) comprises a circumferentially extending seal groove (7) for receiving a sealing ring (8).

4. Parting blade according to any of the preceding claims, **characterized in that** the apertures (2, 3) of the plug provided on the end face (12) and the peripheral surface (13) thereof, respectively, are connected by means of a hole (4) extending obliquely with respect to the axis (9) of the plug (10).

5. Parting blade according to any of claims 1 to 3, **characterized in that** the apertures (2, 3) provided on the end face (12) and the periphery of the plug, respectively, are connected by means of a groove extending obliquely with regard to the axis of the plug from an edge formed by the intersection of the peripheral surface (13b) and an end face (12), and towards the end face and into the peripheral surface.

6. Parting blade according to any of the preceding claims, **characterized in that** the transverse bore (23) of the parting blade is provided as a stepped hole, the wider hole section (25) of which being provided for receiving the flanged rim (5) of the plug (10).

7. Parting blade according to any of the preceding claims, **characterized in that** the transverse bore (23) of the parting blade is formed parallel and symmetrical with regard to a central plane extending between the side surfaces (21, 22) of the parting blade (20).

8. Tool for parting off or grooving including a parting blade (20) according to any of claims 1 to 7, and a parting blade holder (50), having a planar lateral abutment face (32) for the abutment of face (22) of the parting blade and comprising at least one clamping face (34) angled with regard to the abutment face (32) for engaging an edge face of the parting blade, wherein the abutment face comprises a transfer opening (31) which, when the parting blade is mounted, faces the end face aperture (2) of the plug (10).

9. Tool according to claim 8, **characterized in that** in the abutment face (32) there is provided a groove (36) surrounding the transfer opening (31) for receiving a sealing ring (35).

## Revendications

1. Lame à tronçonner (20) comprenant une amenée interne d'agent de refroidissement, la lame à tronçonner (20) comprenant deux surfaces latérales (21, 22) sensiblement planes et parallèles et un alésage transversal traversant (23), qui est relié à un canal d'agent de refroidissement (24) s'étendant à l'intérieur de la lame à tronçonner (20) parallèlement aux surfaces latérales (21, 22), dans laquelle un bouchon ou obturateur (10) doté de deux surfaces frontales (11, 12) sensiblement parallèles et d'une surface périphérique (13), laquelle relie l'une à l'autre les surfaces frontales (11, 12), est prévu, dans laquelle l'obturateur (10) peut être inséré dans l'alésage transversal (23) de telle sorte que l'alésage transversal (23) soit fermé de manière étanche vers au moins une surface latérale (21) de la lame à tronçonner (20) et se termine par cette surface latérale (21) sans faire saillie au-delà de la surface latérale (21) rendue étanche, dans laquelle l'obturateur (10) comprend une ouverture (2 ou 3) respectivement sur sa surface frontale (12) opposée à la surface latérale étanchéifiée (21) ainsi que sur sa surface périphérique (13), et dans laquelle ces ouvertures (2, 3) sont reliées l'une à l'autre à l'intérieur de l'obturateur (10) de sorte que l'obturateur (10) peut relier le canal d'agent de refroidissement (24) ouvert au niveau de la périphérie de l'alésage transversal (23) à une source d'agent de refroidissement opposée à l'ouverture frontale (2) de l'obturateur (10), **caractérisée en ce que** l'obturateur (10) présente la forme de base d'un cylindre dont l'une des surfaces frontales (12) comprend un bord à collerette (5) faisant saillie radialement et une ouverture centrale (2).

2. Lame à tronçonner selon l'une des revendications précédentes, **caractérisée en ce que** la surface périphérique (13) comprend une rainure de distribution périphérique (6) qui réalise, dans n'importe quelle orientation de l'obturateur (10) par rapport à son axe (9), une liaison de l'ouverture (3) sur la surface périphérique (13) de l'obturateur (10) avec l'ouverture (26) du canal d'agent de refroidissement dans l'alésage transversal.

3. Lame à tronçonner selon l'une des revendications précédentes, **caractérisée en ce que** la surface périphérique (13a) comprend, près du côté frontal (11) à rendre étanche, une rainure (7) de joint d'étanchéité périphérique servant à la réception d'une bague d'étanchéité (8) .

4. Lame à tronçonner selon l'une des revendications précédentes, **caractérisée en ce que** les ouvertures (2, 3) de l'obturateur sur une surface frontale (12) et sur sa surface périphérique (13) sont reliées par un alésage (4) s'étendant de manière oblique par rapport à l'axe (9) de l'obturateur (10).

5. Lame à tronçonner selon l'une des revendications 1 à 3, **caractérisée en ce que** les ouvertures (2, 3) au niveau de la surface frontale (12) et au niveau de la périphérie de l'obturateur sont reliées par une rainure, laquelle s'étend de manière oblique par rapport à l'axe de l'obturateur à partir d'une arête formée par l'intersection de la surface périphérique (13b) et d'une surface frontale (12) dans la surface frontale et la surface périphérique.

6. Lame à tronçonner selon l'une des revendications précédentes, **caractérisée en ce que** l'alésage transversal (23) de la lame à tronçonner est formé en tant qu'alésage étagé dont la partie d'alésage élargie (25) est destinée à la réception du bord à collerette (5) de l'obturateur (10).

7. Lame à tronçonner selon l'une des revendications précédentes, **caractérisée en ce que** l'alésage transversal (23) de la lame à tronçonner est formé de manière symétrique par rapport à un plan central parallèlement aux surfaces latérales (21, 22) de la lame à tronçonner (20) et entre celles-ci.

8. Outil destiné à tronçonner ou à saigner comprenant une lame de tronçonnage (20) selon l'une des revendications 1 à 7 et un porte-lame à tronçonner (50), lequel comprend une surface d'appui latéral plane (32) pour l'appui d'une surface latérale (22) de la lame à tronçonner et au moins une surface de serrage (34) inclinée par rapport à la surface d'appui (32) pour l'entrée en prise avec une surface de bord de la lame à tronçonner, la surface d'appui comprenant une ouverture de transfert (31), laquelle est en regard de l'ouverture frontale (2) de l'obturateur (10) lorsque la lame à tronçonner est montée.

9. Outil selon la revendication 8, **caractérisé en ce qu'**une rainure (36) destinée à la réception d'une bague d'étanchéité (35) est prévue dans la surface d'appui (32), laquelle rainure entoure l'ouverture de transfert (31) .
